# EUROPEAN PATENT APPLICATION

(11) **EP 1 186 870 A1**
(43) Date of publication of application: **13.03.2002**
(21) Application number: 01305690.8
(22) Date of filing: 29.06.2001
(51) Int. Cl.: G01K 1/10

(54) **Thermocouple**

(30) Priority: 30.06.2000 JP 2000198836
(71) Applicant: ISUZU CERAMICS RESEARCH INSTITUTE CO., LTD., Fujisawa-shi, Kanagawa-ken (JP)
(72) Inventor: Kita, Hideki, Fujisawa-shi, Kanagawa-ken (JP)
(74) Representative: Jenkins, Peter David

(57) **Abstract**

A thermocouple used to measure a temperature of molten metal having a melting point of not more than 1200°C is such constructed that a pair of alloy stock wires (5) and (6) capable of being used in a temperature region not exceeding 1200°C is embedded in a protective pipe 3 made of ceramic. A measuring contact (2) formed by the extreme ends of a pair of alloy stock wires (5) and (6) connected to each other is secured to the protective pipe (3) by a filler (4) of an inorganic compound such as heat resistant ceramic powder or dehydrated condensation glass.

## Description

The present invention relates to a thermocouple used to measure a temperature of molten metal such as aluminum molten metal and aluminum alloy molten metal having a melting point not more than 1200°C.
In a conventional thermocouple used to measure a temperature of molten metal such as aluminum molten metal and aluminum alloy molten metal having a melting point not more than 1200°C, generally, a pair of alloy stock wires such as a chromel-alumel wire and iron constantan as a temperature detector are received in a sheath made of heat resistant alloy such as stainless, and magnesia (MgO) powders are filled in a vacant space in the sheath by a squeeze method; and a pair of alloy stock wires are embedded into a protective pipe.
As the sheath made of heat resistant alloy reacts with the molten metal and erosion thereof progresses as it is used, the durable life of the sheath is short. In order to suppress reaction between the sheath made of heat resistant alloy and the molten metal, it is contemplated to coat ceramic powder on the sheath made of heat resistant alloy. However, this scatters ceramic powder to deteriorate the field environment. Further, when a pair of alloy stock wires are embedded in a protective pipe made of ceramic, the responsiveness to the change of temperature is not good.

An aim of the present invention is to provide a thermocouple excellent in durability in which a protective pipe is not eroded by the reaction with molten metal.
For solving the aforementioned problem, the present invention provides a thermocouple used to measure a temperature of molten metal having a melting point of not more than 1200°C, characterized in that a pair of alloy stock wires capable of being used in a temperature region not exceeding 1200°C is embedded in a protective pipe made of ceramic, and a measuring contact of the extreme ends of a pair of alloy stock wires connected to each other is secured to said protective pipe by an inorganic compound such as heat resistant ceramic powder and dehydrated condensation glass.

In the thermocouple of the present invention, an alloy stock wire such as a chromel-alumel wire is received in a protective pipe made of silicone nitride ceramic which is hard to get wet in the molten metal, and dehydrated type glass containing magnesia (MgO) is filled in a vacant space in the protective pipe, or a sheath made of heat resistant alloy for receiving and embedding the alloy stock wire is inserted into a protective pipe made of silicone nitride ceramic. The silicone nitride ceramic is not get wet in the molten metal and is slow in erosion, thus extending the service life.

These and other aims and features of the invention will become more apparent upon a perusal of the following description taken in conjunction with the accompanying drawings wherein:
FIG. 1 is a side sectional view of thermocouple according to a first embodiment of the present invention.
FIG. 2 is a side sectional view of thermocouple according to a second embodiment of the present invention.

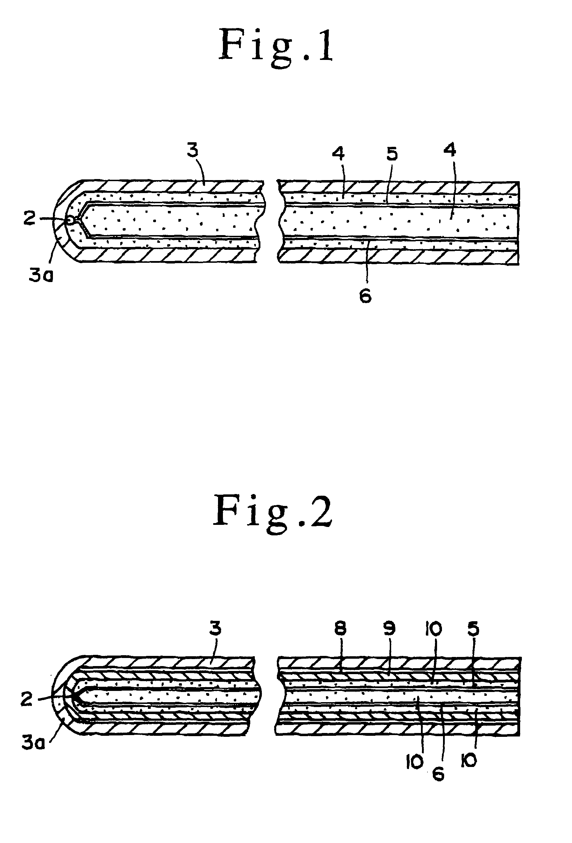

As shown in Fig. 1, thermocouple according to the present invention is so constituted that a pair of alloy stock wires 5 and 6 such as chromel-alumel, chromel-constantan, iron constantan, copper constantan or the like are embedded in a protective pipe 3 made of ceramic, a filler 4 of an inorganic compound such as heat resistant ceramic powder and dehydrated condensation type glass is filled in a vacant space in the protective pipe 3, and a measuring contact 2 having the extreme ends of the pair of alloy stock wires 5 and 6 connected to each other is secured to an end 3a of the protective pipe 3. Proximal ends of the alloy stock wires serve as a reference or standard contact, to which is connected a potentiometer.
The ceramic forming the protective pipe 3 is obtained by sintering, as a starting material, a material in which at least one out of alumina (Al₂O₃), yttria (Y₂O₃) and tantalum oxide (Ta₂O₅) is added to silicone nitride (Si₃N₄), at least one composite out of alumina (Al₂O₃), yttria (Y₂O₃) and tantalum oxide (Ta₂O₅) is added to silicone nitride (Si₃N₄), or preferably, a material in which at least one (or one composite) out of alumina (Al₂O₃), yttria (Y₂O₃) and tantalum oxide (Ta₂O₅) is added to silicone nitride (Si₃N₄), oxygen (O) and magnesium (Mg) (specifically, magnesia (MgO is used). The dehydrated condensation type glass contains oxygen (O), magnesium (Mg), aluminum (A1) and phosphorus.

In the embodiment shown in Fig. 2, a sheath 9 made of heat resistant alloy, in which the pair of alloy stock wires 5 and 6 such as chromel-alumel, chromel-constantan, iron constantan, copper constantan or the like are embedded together with a filler 10 such as powder of magnesia (MgO), is embedded into the protective pipe 3 made of ceramic. The extreme end of the sheath 9 made of heat resistant alloy is placed in contact with the extreme end 3a of the protective pipe 3 made of ceramic. A filler 8 such as magnesia (MgO) powder, aluminum phosphate [(Al₂(PO₃)₃] or the like is filled in a vacant space between the inner peripheral surface of the sheath 9 made of heat resistant alloy and the outer peripheral surface of the protective pipe 3 made of ceramic. The measuring contact 2 formed by the extreme ends of the pair of alloy stock wires 5 and 6 is secured to the inner end of the sheath 9 by the filler 4.
Similarly to the embodiment shown in Fig. 1, the ceramic forming the protective pipe 3 is obtained by sintering, as a starting material, a material in which at least one out of alumina (Al₂O₃), yttria (Y₂O₃) and tantalum oxide (Ta₂O₅) or a composite 6of at least one out of alumina (Al₂O₃), yttria (Y₂O₃) and tantalum oxide (Ta₂O₅) is added to silicone nitride (Si₃N₄) and preferably,including oxygen (O) and magnesium (Mg). The dehydrated condensation type glass contains oxygen (O), magnesium (Mg), aluminum (A1) and phosphorus (P).

### EXAMPLE 1

The protective pipe 3 is molded by an extrusion molding machine from powders of silicone nitride and a small amount of sintering assistant, and was calcined in an atmosphere of nitrogen at a temperature of approximately 1850°C. Chromel-alumel wires 5 and 6 are inserted into the protective pipe 3 formed of the obtained high toughness silicone nitride ceramic, and heat resistant dehydrated condensation glass 4 of aluminum phosphate [(Al₂(PO₃)₃] and magnesia (MgO) are filled in a vacant space in the protective pipe 3 and sealed, thus the chromel-alumel wires 5 and 6 are fixed in the protective pipe 3.
The obtained thermocouple of the present invention was dipped into molten metal of aluminum at a temperature of 700°C, and a temperature measuring test was conducted. It was confirmed that the time till the detected electromotive force was stabilized was 5 seconds, and the repetitive use for 4000 times was enabled. In this thermocouple, the molten metal was not adhered to the protective pipe 3 even after thermocouple has been dipped into molten metal of aluminum at a temperature of 700°C.

### EXAMPLE 2

A material in which chromel-alumel wires 5 and 6 are embedded in a sheath 9 made of stainless steel was inserted into the protective pipe 3 made of silicone nitride ceramic, and dehydrated condensation type glass 8 was filled in a vacant space therebetween. The obtained thermocouple of the present invention was dipped into molten metal of aluminum at a temperature of 700°C, and a temperature measuring test was conducted. It was confirmed that the time till the detected electromotive force was stabilized was 6 seconds, and the repetitive use for 4000 times was enabled. In this thermocouple, the molten metal was not adhered to the protective pipe 3 even after thermocouple has been dipped into molten metal of aluminum at a temperature of 700°C.

### EXAMPLE 3

A material in which iron constantan wires 5 and 6 are embedded in a sheath 9 made of nickel alloy was inserted into the protective pipe 3 made of silicone nitride ceramic, and dehydrated condensation type glass 8 was filled in a vacant space therebetween. The obtained thermocouple of the present invention was dipped into molten metal at a temperature of 500°C, and a temperature measuring test was conducted. It was confirmed that the time till the detected electromotive force was stabilized was 6 seconds, and the repetitive use for 6000 times was enabled. In this thermocouple, the molten metal was not adhered to the protective pipe 3 even after the thermocouple has been dipped into molten metal at a temperature of 500°C.

### COMPARATIVE EXAMPLE

In the conventional thermocouple having alloy sock wires embedded into the sheath made of stainless steel, the time till the detected electromotive force is stabilized is 5 seconds, but the limited times that can be used repetitively was 400 times.

As described above, the present invention provides a thermocouple used to measure a temperature of molten metal having a melting point of not more than 1200'C, characterized in that a pair of alloy stock wires capable of being used in a temperature region not exceeding 1200°C is embedded in a protective pipe made of ceramic, and a measuring contact having the extreme ends of a pair of alloy stock wires connected to each other is secured to said protective pipe by an inorganic compound such as heat resistant ceramic powder, and dehydrated condensation glass. Since the silicone nitride ceramic is not get wet in the molten metal, the erosion is slow and the service life extends.
It is not necessary to coat ceramic powder when in use, as in the conventional sheath made of heat resistant alloy.

## Claims

1. A thermocouple used to measure a temperature of molten metal having a melting point of not more than 1200°C, **characterized in that** a pair of alloy stock wires capable of being used in a temperature region not exceeding 1200°C is embedded in a protective pipe made of ceramic, and a measuring contact having the extreme ends of a pair of alloy stock wires connected to each other is secured to said protective pipe by an inorganic compound such as heat resistant ceramic powder, and/or dehydrated condensation glass.

2. The thermocouple according to claim 1, wherein said pair of alloy stock wires is secured to a sheath made of heat resistant alloy,and said measuring contact and said sheath are buried in said protective pipe.

3. The thermocouple according to claim 2, wherein said pair of alloy stock wires are buried in said sheath made of heat resistant alloy by an inorganic compound such as dehydrated condensation type glass.

4. The thermocouple according to claim 1, wherein said alloy stock wires is at least one selected from the group consisting of chromel-alumel, chromel-constantan, iron constantan, and copper constantan.

5. The thermocouple according to claim 1, wherein ceramic forming said protective pipe comprises silicone nitride (Si₃N₄) and at least one selected from the group consisting of alumina (Al₂O₃), yttria (Y₂O₃) and tantalum oxide (Ta₂O₅).

6. The thermocouple according to claim 1, wherein ceramic forming said protective pipe comprises silicone nitride (Si₃N₄) and a composite of at least one selected from the group consisting of alumina (Al₂O₃), yttria (Y₂O₃) and tantalum oxide (Ta₂O₅).

7. The thermocouple according to claim 1, wherein said dehydrated condensation glass contains oxygen (O), magnesium (Mg), aluminum (A1) and phosphorus (P).

8. The thermocouple according to claims 5 and 6, wherein ceramic forming said protective pipe contains at least oxygen (O) and magnesium (Mg).
